Europäisches Patentamt

European Patent Office

Office européen des brevets

(11) Publication number: **0 372 772 B1**

# EUROPEAN PATENT SPECIFICATION

(45) Date of publication of patent specification: **10.08.94**   (51) Int. Cl.⁵: **G03B 3/10**

(21) Application number: **89312254.9**

(22) Date of filing: **27.11.89**

(54) **Auto focus controlling system.**

(30) Priority: **28.11.88 JP 300313/88**

(43) Date of publication of application:
**13.06.90 Bulletin  90/24**

(45) Publication of the grant of the patent:
**10.08.94 Bulletin  94/32**

(84) Designated Contracting States:
**DE FR GB**

(56) References cited:
**EP-A- 0 238 699**
**US-A- 4 253 752**
**US-A- 4 445 761**
**US-A- 4 509 841**
**US-A- 4 702 584**

(73) Proprietor: **NIKON CORPORATION**
**2-3, Marunouchi 3-chome**
**Chiyoda-ku**
**Tokyo(JP)**

(72) Inventor: **Ogasawara, Akira**
**1048-1 Nakanoshima**
**Tama-ku**
**Kawasaki-shi Kanagawa-ken(JP)**

(74) Representative: **Burke, Steven David et al**
**R.G.C. Jenkins & Co.**
**26 Caxton Street**
**London SW1H 0RJ (GB)**

## Description

### Field of the Invention

The present invention relates to a TTL auto focus controlling system, and is particularly concerned with an auto focus controlling system operating by computing new focused positions successively according to an accumulating operation of a charge storage sensor while driving a camera lens to focused positions.

### Related Background Art

Such an auto focus controlling system is known wherein a camera lens is driven by a motor, a luminous flux, from an object to be photographed, having passed through the camera lens and being imaged on a light receiving element such as a CCD which is provided within the camera body to detect the amount of defocus, and focusing is then controlled to attain a focused state.

Generally, such an auto focus controlling system operates for "range finding" to detect a focused state of optical system, and "lens drive" to drive a camera lens according to a result of range finding. The case where the focusing operation is completed in one cycle of "range finding" and "lens drive" may involve no problem. However, if the amount of defocus becomes appreciable, the range finding lacks precision, and therefore both the "range finding" and "lens drive" must be repeated after the lens is driven once. In the case where the object moves continuously, "range finding" and "lens drive" must be repeated dynamically so as to retain the focus.

In such case, the efficiency of the system may be enhanced by overlapping the range finding and the lens drive in time. However, in an auto focus controlling system using a charge storage sensor such as a CCD or the like as the light receiving element, a storage time which depends on the strength of the incident light is required for converting an optical image on the sensor into photoelectrons and thus obtaining a video signal having an appropriate S/N ratio. If the range finding is carried out while a camera lens is being driven, the light intensity distribution on the sensor changes during the storage time as a result of the movement of the camera lens. It cannot therefore be estimated precisely which lens position is equivalent to the amount of defocus calculated by processing the sensor output after the storage time has elapsed.

Thus, the sequence for servoing the camera lens for auto focus control comprises either a cycle wherein the range finding is effected while keeping the camera lens still, and the camera lens is then driven according to the result of the range finding is repeated as mentioned above, or a sequence wherein the lens is driven during the sensor storage time, it being assumed that the camera lens moves at a uniform velocity at least during the sensor storage time. The lens movement is corrected for by assuming that the calculated amount of defocus is the same as that occuring at a camera lens position halfway between that at the start and that at the end of the sensor storage time. The subsequent servo drive is carried out continuously and repeatedly.

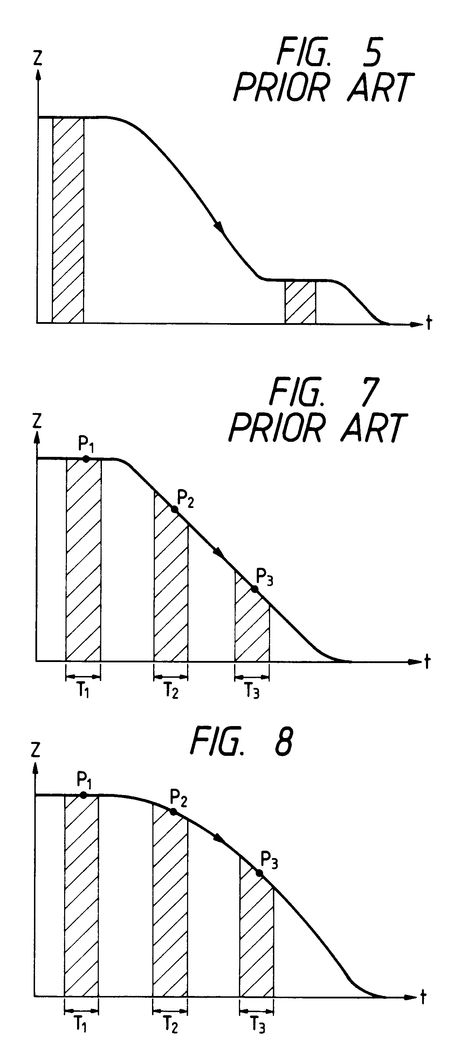

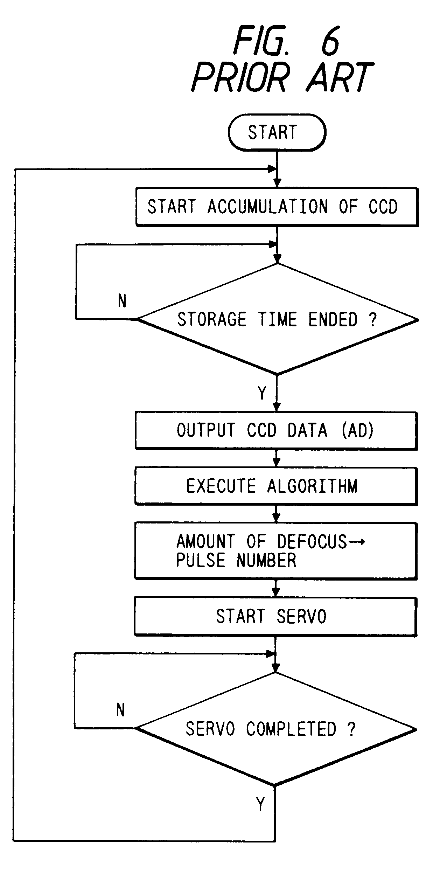

With the ordinate indicating lens position Z and the abscissa indicating time t, Fig. 5 represents a prior art method wherein a range finding and lens drive are repeated alternately in an autofocus servo system, in a mode wherein a camera lens is driven to a focused position ($Z = 0$). Then, as shown in the graph, the charge on the sensor is accumulated during time intervals indicated by the shaded portions, thereby computing the amount of defocus. Further, Fig. 6 is a flowchart indicating a sequence wherein the range finding and lens drive of Fig. 5 are repeated alternately. Fig. 7 is an explanatory drawing of a lens drive when range finding and lens drive are overlapped, the rate of movement of the camera lens during charge accumulation of the sensor being constant.

As illustrated in Fig. 7, if the rate of movement of the lens is constant during the sensor storage times (times for range finding) T1, T2, T3, then range finding positions corresponding to a range finding result (amount of defocus) obtained through the storage times T1, T2, T3 are P1, P2, P3 respectively, these being equivalent to mid-points of the storage times T1, T2, T3.

However, although this assumes that the rate of movement of the camera lens during charge accumulation of the sensor is constant, if the lens position is corrected by computing again the amount of defocus while the lens is being driven, the rate of movement of the lens will in practice change when a driving motor is started and braked, or the driving rate is modified. Even if the lens is subjected to a steady drive, if a mechanical design and a fabrication are not satisfactory, then the motor load will vary considerably according to the position of the lens, and thus a constant rate of the motor cannot be assumed in most cases. Thus a lens movement corresponding to the amount of defocus cannot be corrected as precisely as expected.

Fig. 8 represents the case where the lens driven speed is not constant during the period of time of charge accumulation of the sensor (operation for range finding) as indicated by the shaded portions, which is different from that of Fig. 7, since the lens is accelerated and decelerated generally as shown in Fig. 8. The method for correcting a lens movement corresponding to the amount of defocus on the assumption that the lens driven speed is constant is therefore not satisfactory.

US-A-4445761 describes a focus control system for a camera having a CCD for receiving light from an object through a lens and generating a photoelectric signal in dependence on the intensity distribution of the light which is received during a period of charge storage by said light receiving means, the system comprising means operative following said charge storage period for computing a defocus amount according to said photoelectric signal, controlling means for operating said light receiving means and said computing means repeatedly, drive means for driving said lens during at least a part of the period of charge storage of said light receiving means and means for generating a position signal having a value indicating a position of said lens for each movement of said lens by a predetermined driving amount. In this system, an amount of defocus is calculated as an amount corresponding to a lens position which is halfway between the initial position and the final position of the lens during the period of charge storage. Thus, as in the system described above, an assumption is made that the lens driven speed is constant.

## SUMMARY OF THE INVENTION

It would therefore be desirable to overcome the problems inherent in the prior art by providing an automatic focusing control system whereby an improved focusing precision is obtainable by more accurately computing the amount of defocus of a driven lens.

In accordance with the present invention there is provided a focus control system for a camera having a charge storage light receiving means for receiving light from an object through a lens and generating a photoelectric signal in dependence on the intensity distribution of the light which is received during a period of charge storage (T) by said light receiving means, said system comprising:

computing means operative following said charge storage period for computing a defocus amount according to said photoelectric signal;

controlling means for operating said light receiving means and said computing means repeatedly;

drive means for driving said lens during at least a part of the period of charge storage of said light receiving means; and

means for generating position signals (Pn) having values indicating successive positions of said lens;

characterised in that said system further comprises:

interval detecting means for detecting time intervals between successive position signals and for generating interval detection signals (tn) having respective values indicating the duration of said intervals; and

determining means for computing a value

$$\left(\frac{\Sigma Pn.tn}{T}\right)$$

equal to the summation of each position signal value (e.g. Pn) multiplied by a corresponding interval signal value (e.g. tn) for all position signals generated during said period of charge storage, divided by said period of charge storage (T), and for determining an equivalent position of said lens during said period of charge storage (T), said equivalent position corresponding to the computed value

$$\left(\frac{\Sigma Pn.tn}{T}\right),$$

said computing means being arranged to correct said defocus amount so as to compensate for the movement of said lens from the time when said lens was at said equivalent position to the time when said determining means determines said equivalent position, the corrected defocus amount being used in controlling said drive means.

(STEP 1)

While the camera lens is driven to a focused position, an accumulating operation is performed on the light receiving means for a predetermined period of time, and, after the accumulation is complete, a new amount of defocus is computed by the computing means.

(STEP 2)

An equivalent lens position (Pm) corresponding to a reference position for defocus computation according to STEP 1 is computed as the sum total of a value (Pn • tn/T) obtained by multiplying the ratio (tn/T) of the time (tn) per unit movement of the camera lens to the total storage time (T) by the lens position (Pn) at each unit movement.

(STEP 3)

The next amount of defocus is obtained from a new amount of defocus obtained at STEP 1 by subtracting a value obtained through deducting the aforementioned equivalent camera lens position from a camera lens position at the point in time when the amount of defocus after the end of accumulation is computed from the amount of defocus obtained at STEP 1.

(STEP 4)

The amount of defocus obtained newly as above is applied to the driving means, and the camera lens is servoed to a focused position.

In such a dynamic focusing control system, the position of the camera lens is controlled by computing the amount of defocus according to an output of the sensor for a given storage time on the basis of a weighted mean. The "range finding" and "lens drive" are thus overlapped in time. Consequently, an equivalent position of the camera lens will be computed so as to monitor precisely the movement of the camera lens, the lens position corresponding to a result (amount of defocus) obtained accurately during an overlap with the lens drive, thus correcting the result of range finding at high precision as compared with the prior art method.

Other features and advantages of the present invention will be more apparent in the following detailed description of preferred embodiments described with reference to the accompanying drawings.

BRIEF DESCRIPTION OF THE DRAWINGS

Fig. 1 is a block diagram showing a schematic construction of a control system embodying the invention.

Fig. 2 is an explanatory drawing of an amount of defocus.

Fig. 3 is an explanatory drawing showing a state wherein a lens is driven to a focused position, illustrating a principle of computing an equivalent position of the lens in the example given in Fig. 1.

Fig. 4A and Fig. 4B are flowcharts indicating a focusing control operation of the control system according to an embodiment of the invention, wherein Fig. 4A refers to a main routine and Fig. 4B refers to an interruption routine run whenever a feedback pulse is generated.

Fig. 5 is an explanatory drawing illustrating a range finding and a lens drive in a static state according to the prior art.

Fig. 6 is a flowchart indicating a control operation according to the focusing control method in Fig. 5.

Fig. 7 is an explanatory drawing of a prior art servo control by overlapping range finding and lens drive with the lens moving rate being constant.

Fig. 8 is an explanatory drawing of a servo control overlapping range finding and lens drive in which the lens is accelerated and decelerated.

DETAILED DESCRIPTION OF PREFERRED EMBODIMENTS

Operative examples of the invention will now be described in detail with reference to the accompanying drawings.

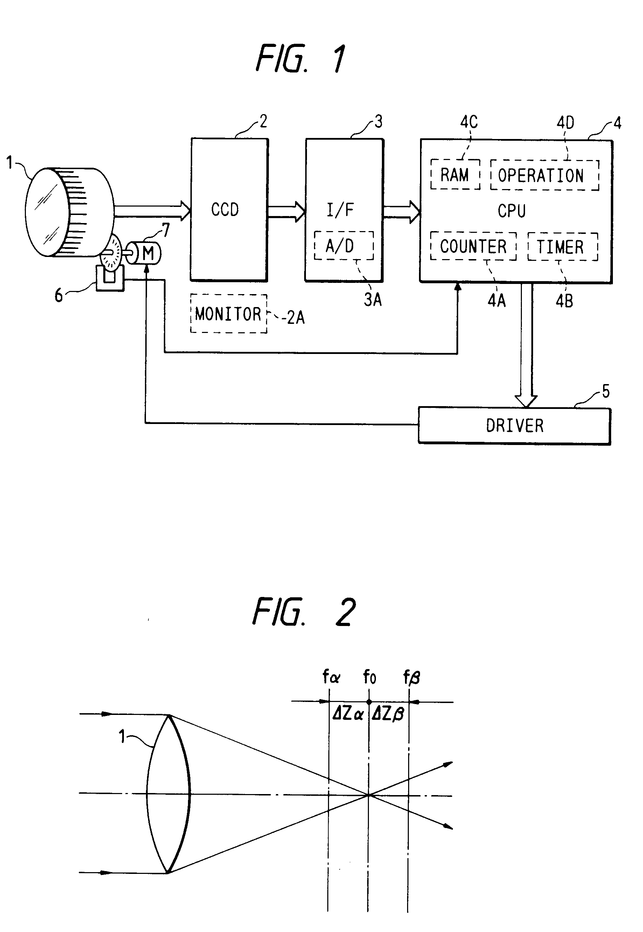

Fig. 1 is a block diagram showing a schematic construction of an auto focus controlling system embodying the invention, wherein a camera lens is driven by a motor to servo a focused state.

In Fig. 1, light from the object having passed through a lens 1 is imaged on a light receiving sensor 2 provided in a camera body as light receiving means, and a signal from the light receiving sensor 2 is sent to a controller 4 for controlling the system wholly through an interface 3. Then, a charge storage type light receiving element such as a CCD or the like is used as the light receiving sensor 2, and a microprocessor is used as the controller 4. The microprocessor, also called a microcomputer, is referred to as a "CPU" for simplicity hereinafter.

A light intensity distribution on the light receiving sensor 2 is subjected to AD conversion on the interface 3 and outputted to CPU 4, or is amplified to an appropriate signal level on the interface 3 and subjected to AD conversion directly on AD converter.

The light intensity distribution converted thus into a digital signal is processed by CPU 4 on a predetermined AF (auto focus) algorithm, and a movement of the camera lens necessary to obtain a focused state is computed. Since the lens movement is equivalent to an amount of defocus which will be described below, it is called "amount of defocus" hereinafter. There are many known examples given already of optical principles and algorithms for detecting the amount of defocus in practice, and therefore a further description will be omitted here.

The camera lens 1 is provided with an encoder 6 for monitoring its movement, and the encoder 6 generates a pulse (called a "feedback pulse" hereinafter) whenever the camera lens 1 moves a predetermined distance along an optical axis. CPU 4 instructs a motor driver 5 in accordance with a computed amount of defocus (lens move) to drive a servometer 7, thus driving the camera lens 1 in the direction of focusing. The movement of the camera lens 1 is monitored by CPU 4 by the feedback pulses from the encoder 6, and it stops driving when the number of feedback pulses counted from the encoder 6 is equal to the number corresponding to the amount of defocus.

The encoder 6 has a photointerrupter provided on a rotating shaft of the motor 7 and one part of a reduction gear so as to detect rotations of the camera lens driving servomotor 7.

Fig. 2 is an explanatory drawing of the amount of defocus detected by the dynamic focusing control system.

In Fig. 2, the amount of defocus is defined as the position where the luminous flux passed through the lens 1 is imaged in relation to the film plane, i.e. an out-of-focus amount $\Delta Z$. That is, an image surface of the camera lens 1 in the film plane $f_0$ indicates a focused state, an image at a position $f_\alpha$ forward of $f_0$ (leftward in Fig. 2) indicates a so-called forward-focused state, and an image at a position $f_\beta$ rearward of $f_0$ (rightward in Fig. 2) indicates a so-called rearward-focused state.

Then, as will be apparent from Fig. 2, if a subject is present relatively far away, the out-of-focus $\Delta Z$ and the lens movement necessary for focusing are almost equal. Accordingly, to image (focus) the subject image on the film plane, the camera lens 1 is driven longitudinally by an amount of defocus $\Delta Z\alpha$ for a forward-focused state, or by an amount of defocus $\Delta Z\beta$ for a rearward-focused state. Consequently, the description on AF servo according to Fig. 1 indicates that the movement of the camera lens 1 necessary to obtain a focused state is also regarded as amount of defocus. When the focal distance approaches, the amount of defocus $\Delta Z$ and the lens movement do not coincide precisely, but, it is assumed that both the two are equal in the description given henceforward.

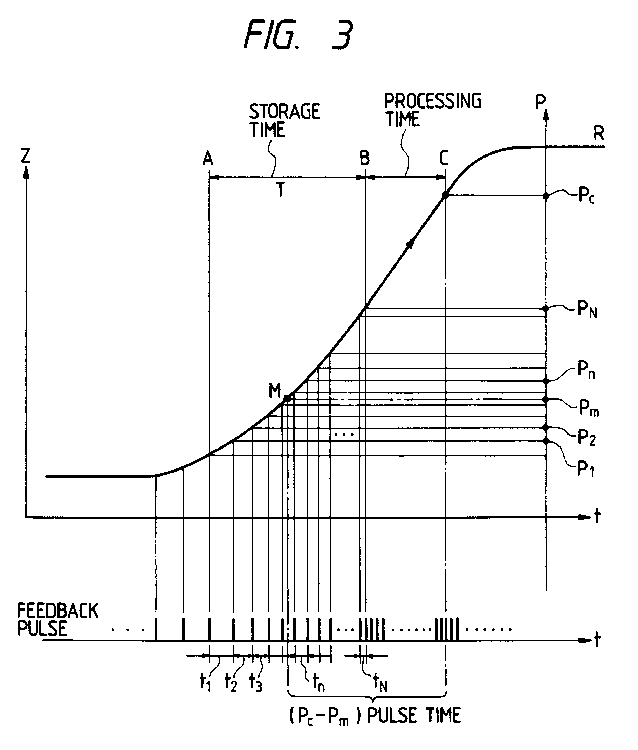

With reference to Fig. 3, there is now described a method wherein range finding is performed while the lens is driven according to a control method of the system embodying the invention, and a notional position corresponding to the amount of defocus obtained from the range finding result, i.e. an equivalent camera lens position, is obtained.

Fig. 3 shows a mode wherein the camera lens is servoed and driven by a motor so as to focus on a subject, the ordinate indicating a camera lens position Z, the abscissa indicating a time t, the curve R indicating a moving path of the camera lens 1. A feedback pulse generated through monitoring the movement of the camera lens 1 while the camera lens 1 is driven is indicated below the abscissa.

Now, in Fig. 3, assuming that a storage start time of the charge storage sensor (hereinafter called "AF sensor") 2 or a light receiving element during a drive of the camera lens 1 is A, and a storage end time is B, the AF sensor 2 stores a charge corresponding to the light intensity distribution on a sensor light receiving surface for a storage time T continuously from the time A to the time B. During storage in the AF sensor 2, the light intensity distribution on the sensor light receiving surface will change continuously according to the movement of the camera lens. However, in the invention, the camera lens 1 comes to a stop during a period of time when the feedback pulses are being generated at regular intervals, and the sum total of charges stored corresponding to the light intensity distribution in each interval between successive feedback pulses approximates to an output of the AF sensor. A change in the light intensity distribution during the interval of the feedback pulses is very small, and therefore such approximation will not involve a problem in practice.

Further, if the pulse count values produced in the servo circuit, or the CPU 4 indicated in Fig. 1, at positions where each feedback pulse is generated are P1, P2, P3, ... Pn, then these pulse count values indicate lens position relative to that corresponding to the pulse count value = 0, and in Fig. 3, the pulse count value P (P base coordinate value) is indicated on the right axis of ordinate.

Normally, when the amount of defocus $\Delta Z$ is computed according to new range finding data and the servo desired pulse number corresponding to the amount of defocus is updated, the pulse counter 4A of CPU 4 monitoring the lens drive rate is reset to zero, and a new desired drive rate is set to maintain the servo drive. Therefore the pulse count values in the servo, such as P1, P2, ..., indicate positions of the camera lens 1 (lens coordinate positions) measured in the direction of servo (moving direction) relative to the "reset" position at which the servo control was started immediately before. Accordingly, in the description given below, the pulse count value Pn is referred to as the (relative) position Pn.

Further, as shown in Fig. 3, the time intervals between adjacent pulses from the charge storage start A of the AF sensor 2 by the encoder 6 are denoted by t1, t2, t3, ..., tn, ... tN in that order. Times are stored in a timer 4B in the CPU 4 whenever a feedback pulse is generated, and the pulse intervals are obtained by deducting the time of the previous pulse from the storage time.

Consequently, the (relative) position Pn of the camera lens 1, and the elapsed time tn from the previous pulse, i.e. the pulse interval are determined whenever a feedback pulse is obtained.

Since the ratio of the quantity of light stored at the position Pn to the total quantity of light stored in the AF sensor 2 over the storage time T is equal to the ratio (tn/T), the expression (Pn $\cdot$ tn/T) is effectively the multiplication of the position Pn by the ratio of the quantity of light stored at the position Pn to the total quantity of light stored as a weighting, and thus a position Pm given by:

$$Pm = \Sigma Pn \cdot tn/T \qquad (1)$$

indicates a mean lens position for the total quantity of light received on the AF sensor 2, and the position Pm is defined as an equivalent camera lens position in the invention.

The equation (1) for obtaining the equivalent camera lens position Pm directly expresses a time-weighted, or a timed mean position of the lens. However, considering that the quantity of light received by the AF sensor 2 is proportional to the storage time, the position Pn may indicate a mean position of the camera lens 1 with the quantity of light received as a weighting, or a mean light receiving position as the pulse count.

Thus the equivalent camera lens position Pm computed according to Eq. (1) is obtained by an algorithm for computing the amount of defocus from a total received light output of the AF sensor 2, and while not strictly coincident with a lens position corresponding to the final amount of defocus, it may be regarded as almost equal thereto in practice. This may be identified by intuition that the mean light-receiving position obtained as above will be almost equal to a lens position corresponding to a computed result of the final defocus in consideration of the general property that the magnitude of the quantity of light received at each position of the lens may determine its contribution to the computed result of the final defocus at the lens position.

Here, a predetermined processing time is necessary for the amount of defocus and equivalent camera lens position Pn to be computed from the stored charge on the AF sensor 2. Accordingly a notional lens movement from the equivalent camera lens position is obtainable through reading a feedback pulse Pc at the point in time when the predetermined processing time is over, or immediately before starting the next servo, and deducting the pulse count Pm at the computed equivalent camera lens position. In the case of Fig. 3, the pulse number (Pc - Pm) for the period from an equivalent camera lens position M to the time C whereat a computation of the amount of defocus is over corresponds to this notional movement. Accordingly, if the value obtained by converting the computed amount of defocus into the pulse number is Ps1, and the next servo desired pulse number having a lens movement from the equivalent camera lens position M corrected to Ps1 is Ps2, then Ps2 is obtainable as:

$$Ps2 = Ps1 - (Pc - Pm) \qquad (2)$$

However, a code for obtaining Ps2 is determined subject to the counter 4A for counting feedback pulses being an up-count type wherein the count value is incremented as the pulse is inputted.

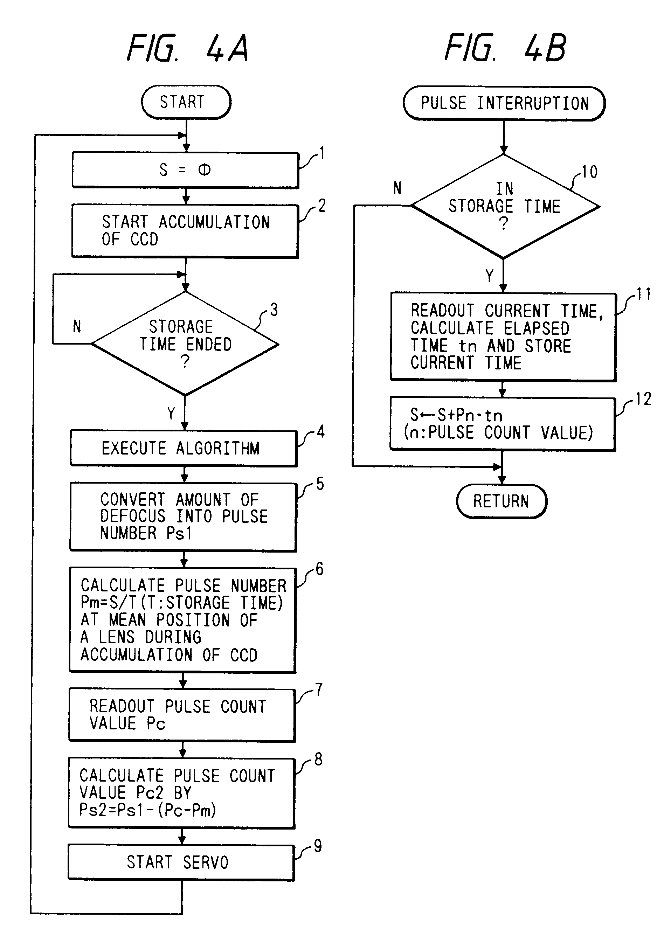

Fig. 4A and Fig. 4B are flowcharts indicating a control method of the automatic focusing control system according to an embodiment of the invention, i.e. the control method effective by overlapping the storage on AF sensor and the lens drive. The flowcharts refer to a main routine of Fig. 4A and an interruption routine of Fig. 4B which is run whenever the feedback pulse shown therein is outputted.

Now, in Fig. 4A, after a buffer S is cleared at STEP 1, storage of the AF sensor 2 is commenced at STEP 2. Then, the storage for an appropriate predetermined time is performed according to the intensity of the light received at STEP 3. For detection of an end of the storage at STEP 3, a separate sensor 2A for monitoring the quantity of light is provided on the AF sensor 2, and an output of the monitoring sensor is detected, or the timer 4B is set so as to have an appropriate storage time estimated from the previous output level of AF sensor. The former is called hard AGC, and the latter is called soft AGC.

Accordingly, when a storage end is detected by hard AGC or soft AGC, a read operation by the AF sensor is carried out, and an output of the AF sensor is subjected to AD conversion by AD converter 3A in the interface 3 and loaded in RAM 4C in the CPU 4.

Then at STEP 4, next, arithmetic means 4D of the CPU 4 computes the amount of defocus on AD conversion data of the AF sensor loaded in RAM 4C according to a predetermined algorithm, and the computed amount of defocus is converted into the pulse number Ps1 corresponding thereto at STEP 5.

On the other hand, during the storage time at STEP 3, an interruption routine of Fig. 4B is run whenever the feedback pulse generated from the encoder 6 is obtained as the camera lens 1 is moved.

In the interruption routine of Fig. 4B, if the storage time is so decided at STEP 10, then an elapsed time tn from the previous pulse is computed at STEP 11. Thus, after the elapsed time tn from the previous pulse is computed, the time whereat a current pulse is generated is stored for the next interruption.

Next at STEP 12, the count value Pn of the feedback pulse which is already obtained is multiplied by the elapsed time tn obtained at STEP 11, which is added to the buffer S cleared at STEP 1 of Fig. 4A. Accordingly, ($\Sigma Pn \cdot tn$) is stored in the buffer S when a charge storage of the AF sensor 2 is over.

Referring again to Fig. 4A, at STEP 6 a value of the buffer S obtained by the interruption routine of Fig. 4B, i.e. $S = \Sigma Pn \cdot tn$ is divided by the storage time T, thus computing the equivalent camera lens position Pm. Then at STEP 7, the count value Pc of the feedback pulse at the time (time C in Fig. 3) when the equivalent camera lens position Pm is computed at STEP 6 is read.

At STEP 8 next,

$$Ps2 = Ps1 - (Pc - Pm)$$

is computed according to the pulse number Ps1 into which the amount of defocus computed at STEP 5 is converted, the count value Pc read out at STEP 7, and the equivalent camera lens position Pn computed at STEP 6, and the next servo desired pulse number Ps2 is obtained. Finally a servo drive according to the servo desired pulse number Ps2 is commenced at STEP 9.

Needless to say, when the processing from STEP 1 to STEP 9 is once over while the camera lens 1 is still being driven to a focused position, a similar servo cycle is repeated from STEP 1 again until the camera lens 1 comes to reach the focused position.

From applying such a control method to a servo control of auto-focusing, a range finding occurs twice or more until the lens is driven to a focused state when the amount of defocus to a subject is large, or the subject is bright and the storage time is correspondingly short, thus realizing a high-speed precise focusing control. That is, by applying the control method of the invention when the camera lens is accelerated and decelerated, range finding data during the lens movement can be corrected precisely. Needless to say, the control method of the dynamic focusing control system according to the invention can also be applied to the case where the lens moving rate is almost constant as shown in Fig. 7, and a satisfactory correction result is obtainable likewise.

As described in detail above, according to the invention, a focusing control of the dynamic focusing control system from overlapping a range finding and a lens drive may be realized precisely and also at high speed.

That is, while the prior art dynamic focusing control system must repeat lens drive and stop a number of times until a lens is correctly focused, the dynamic focusing control system of the invention is such that, where there is much time left for range refinding during the lens drive, namely a sufficient charge storage time, range refinding is complete at a position where the camera lens comes near to or around a focused point, thus enhancing the range finding precision. If so, then the amount of defocus may be regarded as small in most cases after a servo according to the range refinding comes to an end, and thus the lens is stationary. The lens is therefore less often required to be driven again, and thus not only is the time necessary for focusing shortened, but a user may also enjoy a feeling of smooth handling.

## Claims

1.  A focus control system for a camera having a charge storage light receiving means (2) for receiving light from an object through a lens (1) and generating a photoelectric signal in dependence on the intensity distribution of the light which is received during a period of charge storage (T) by said light receiving means (2), said system comprising:
    computing means (4) operative following said charge storage period for computing a defocus amount according to said photoelectric signal;
    controlling means (4) for operating said light receiving means (2) and said computing means (4) repeatedly;
    drive means (5,7) for driving said lens (1) during at least a part of the period of charge storage of said light receiving means; and
    means (4A,6) for generating position signals (Pn) having values indicating successive positions of said lens (1);
    characterised in that said system further comprises:
    interval detecting means (4B) for detecting time intervals between successive position signals (Pn) and for generating interval detection signals (tn) having respective values indicating the duration of said intervals; and
    determining means (4) for computing a value

$$\left(\frac{\Sigma Pn \cdot tn}{T}\right)$$

equal to the summation of each position signal value (e.g. Pn) multiplied by a corresponding interval signal value (e.g. tn) for all position signals generated during said period of charge storage, divided by said period of charge storage (T), and for determining an equivalent position of said lens (1) during said period of charge storage (T), said equivalent position corresponding to the computed value

$$\left(\frac{\Sigma Pn.tn}{T}\right) \, ,$$

said computing means (4) being arranged to correct said defocus amount so as to compensate for the movement of said lens (1) from the time when said lens (1) was at said equivalent position to the time when said determining means (4) determines said equivalent position, the corrected defocus amount being used in controlling said drive means (5,7).

2. A system according to claim 1, wherein said position signal generating means (4A,6) comprises an encoder (6) for generating feedback pulses according to the movement of said lens (1) and a counter (4A) for counting the feedback pulses, and said computing means (4) is arranged to compute a pulse number Ps2 corresponding to the defocus amount in accordance with the following equations:

$$Pm = \Sigma Pn \cdot tn/T, \quad Ps2 = Ps1 - (Pc - Pm)$$

where:

T : charge storage time;

tn : n-th pulse period of the encoder (6);

Pn : pulse count value of the counter (4A) corresponding to the lens position;

Pm : pulse count value of the counter (4A) corresponding to the equivalent position (i.e. the mean lens position for the total quantity of light stored in the charge storage light receiving means (2));

Pc : pulse count value at the time when the equivalent position is determined by said determining means (i.e. the lens position immediately before the start of the next charge storage period (T));

Ps1 : value obtained through converting the amount of defocus corresponding to the photoelectric signal into a pulse number.

3. A system according to claim 1 or claim 2, wherein said computing means (4) is arranged to compute a first defocus amount including said amount of movement of said lens (1) and to compute a second defocus amount not including said amount of movement of said lens (1).

4. A system according to claim 3, wherein said computing means (4) is arranged to convert said first defocus amount into a number corresponding to a number of position signals and to compute a number of position signals corresponding to said equivalent position.

5. A system according to claim 4, wherein said computing means (4) is arranged to compute a number of position signals corresponding to said second defocus amount on the basis of the number of position signals corresponding to said first defocus amount and the number of position signals corresponding to said equivalent position.

**Patentansprüche**

1. Fokussiersteuerungssystem für eine Kamera mit einer Ladungsspeicherungs-Lichtaufnahmevorrichtung (2) für den Empfang von Licht von einem Objekt durch ein Objektiv (1) und zur Erzeugung eines photoelektrischen Signals in Abhängigkeit von der Intensitätsverteilung des Lichts, das während einer Periode der Ladungsspeicherung (T) durch die Lichtaufnahmevorrichtung (2) aufgenommen wird, wobei das System aufweist:
   - eine Berechnungsvorrichtung (4), die, der Ladungsspeicherungsperiode folgend, arbeitet und entsprechend dem photoelektrischen Signal einen Defokussierungs-Betrag berechnet,
   - eine Steuervorrichtung (4) zum wiederholten Betätigen der Lichtaufnahmevorrichtung (2) und der Berechnungsvorrichtung (4),
   - einer Antriebsvorrichtung (5, 7) zum Bewegen des Objektivs (1) in mindestens einem Teil der Periode der Ladungsspeicherung der Lichtaufnahmevorrichtung und
   - eine Vorrichtung (4A, 6) zum Erzeugen von Positionssignalen (Pn), die Werte haben, die aufeinanderfolgende Positionen des Objektivs (1) kennzeichnen,

dadurch gekennzeichnet, daß das System weiter aufweist:
   - eine Intervallnachweisvorrichtung (4B) zum Nachweisen von Zeitintervallen zwischen aufeinanderfolgenden Positionssignalen (Pn) und zum Erzeugen von Intervallnachweissignalen (tn), die jeweils Werte haben, die die Dauer der Intervalle kennzeichnen, und
   - eine Bestimmungsvorrichtung (4) zum Berechnen eines Wertes

$$\left(\frac{\Sigma Pn.tn}{T}\right),$$

der gleich der Summe jedes Positionssignalwertes (z. B. Pn), multipliziert mit einem entsprechenden Intervallsignalwert (z. B. tn) für alle Positionssignale, die während der Periode der Ladungsspeicherung erzeugt wurden, geteilt durch die Periode der Ladungsspeicherung (T) ist, und zum Bestimmen einer äquivalenten Position des Objektivs (1) während der Periode der Ladungsspeicherung (T), wobei die äquivalente Position dem berechneten Wert

$$\left(\frac{\Sigma Pn.tn}{T}\right)$$

entspricht und die Berechnungsvorrichtung (4) so ansgelegt ist, daß sie den Betrag der Defokussierung korrigiert, um die Bewegung des Objektivs (1) von der Zeit an, zu der das Objektiv in der äquivalenten Position war, bis zu der Zeit, zu der die Bestimmungsvorrichtung (4) die äquivalente Position bestimmt, zu kompensieren, wobei der korrigierte Betrag der Defokussierung zur Steuerung der Antriebsvorrichtung (5, 7) verwendet wird.

2. System nach Anspruch 1, wobei die Positionssignalerzeugungsvorrichtung (4A, 6) einen Kodierer (6) zur Erzeugung von Rückkopplungsimpulsen entsprechend der Bewegung des Objektivs (1) und einen Zähler (4A) zum Zählen der Rückkopplungsimpulse aufweist und die Berechnungsvorrichtung (4) so ausgelegt ist, daß sie eine dem Betrag der Defokussierung entsprechende Impulszahl Ps2 in Übereinstimmung mit den folgenden Gleichungen zu berechnen:

Pm = $\Sigma$Pn • tn/T, Ps2 = Ps1 - (Pc - Pm)

worin sind:

T : die Ladungsspeicherzeit,
Tn : die n-te Impulsperiode des Kodierers (6),
Pn : der Impulszählwert des Zählers (4A), der der Objektivposition entspricht,
Pm : der Impulszählwert des Zählers (4A), der der äquivalenten Position (d. h. der mittleren Objektivposition für die Gesamtmenge des in der Ladungsspeicher-Lichtaufnahmevorrichtung (2) gespeicherten Lichtes),
Pc : der Impulszählwert zur Zeit, in der die äquivalente Position durch die Bestimmungsvorrichtung bestimmt wird (d. h. der Objektivposition unmittelbar vor dem Beginn der nächsten Ladungsspeicherperiode (T)),
Ps1: der Wert, der durch Umwandeln des Betrages der Defokussierung, der dem photoelektrischen Signal entspricht, in eine Impulszahl erhalten wird.

3. System nach Anspruch 1 oder 2, wobei die Berechnungsvorrichtung (4) so ausgelegt ist, daß sie einen ersten Betrag der Defokussierung berechnet, der den Betrag der Bewegung des Objektivs (1) einschließt, und daß sie einen zweiten Betrag der Defokussierung berechnet, der den Betrag der Bewegung des Objektivs (1) nicht einschließt.

4. System nach Anspruch 3, wobei die Berechungsvorrichtung (4) so ausgelegt ist, daß sie den ersten Betrag der Defokussierung in eine Zahl umwandelt, die einer Zahl von Positionssignalen entspricht, und so, daß sie eine Zahl von Positionssignalen berechnet, die der äquivalenten Position entspricht.

5. System nach Anspruch 4, wobei die Berechungsvorrichtung (4) so ausgelegt ist, daß sie eine Zahl von Positionssignalen entsprechend dem zweiten Betrag der Defokussierung auf der Basis der Anzahl von Positionssignalen entsprechend dem ersten Betrag der Defokussierung und der Zahl von Positionssignalen entsprechend der äquivalenten Position berechnet.

**Revendications**

1. Système de mise au point pour un appareil de prise de vues ayant des moyens de réception de lumière (2) à stockage de charge pour recevoir de la lumière d'un objet à travers un objectif (1) et produire un signal photoélectrique en fonction de la distribution d'intensité de la lumière qui est reçue pendant une période de stockage de charge (T) par lesdits moyens de réception de lumière (2), ledit système comprenant :

des moyens de calcul (4) fonctionnant à la suite de ladite période de stockage de charge pour calculer une valeur d'écart de mise au point en fonction dudit signal photoélectrique ;

des moyens de commande (4) pour faire fonctionner de manière répétée lesdits moyens de réception de lumière (2) et lesdits moyens de calcul (4) ;

des moyens d'entraînement (5, 7) pour déplacer ledit objectif (1) pendant au moins une partie de la période de stockage de charge desdits moyens de réception de lumière ; et

des moyens (4A, 6) pour produire des signaux de position (Pn) ayant des valeurs indiquant des positions successives dudit objectif (1) ;

caractérisé en ce que ledit système comprend en outre :

des moyens de détection d'intervalle (4B) pour détecter des intervalles de temps entre des signaux successifs de position (Pn) et pour produire des signaux de détection d'intervalle (tn) ayant des valeurs respectives indiquant la durée desdits intervalles ; et

des moyens de détermination (4) pour calculer une valeur ($\Sigma$ Pn.tn/T) égale à la sommation de chaque valeur de signal de position (par exemple Pn) multipliée par une valeur correspondante de signal d'intervalle (par exemple tn) pour tous les signaux de position produits pendant ladite période de stockage de charge (T) divisée par ladite période de stockage de charge (T), et pour déterminer une position équivalente dudit objectif (1) pendant ladite période de stockage de charge (T), ladite position équivalent correspondant à la valeur calculée ($\Sigma$ Pn.tn/T), lesdits moyens de calcul (4) étant agencés pour corriger ladite valeur d'écart de mise au point afin de compenser le déplacement dudit objectif (1) à partir de l'instant où ledit objectif (1) était à ladite position équivalente jusqu'à l'instant où lesdits moyens de détermination (4) déterminent ladite position équivalente, la valeur corrigée d'écart de mise au point étant utilisée pour commander lesdits moyens d'entraînement (5, 7).

2. Système selon la revendication 1, dans lequel lesdits moyens de production de signaux de position (4A, 6) comprennent un codeur (6) pour produire des impulsions d'action en retour en fonction du déplacement dudit objectif (1) et un compteur (4A) pour compter les impulsions d'action en retour, et lesdits moyens de calcul (4) sont agencés pour calculer un nombre d'impulsions Ps2 correspondant à la valeur d'écart de mise au point selon les équa-

tions suivantes

$$Pm = \Sigma Pn \cdot tn/T, \quad Ps2 = Ps1 - (Pc - Pm)$$

dans lesquelles :
- T : temps de stockage de charge ;
- tn : n-ième période d'impulsion du codeur (6) ;
- Pn : valeur de comptage d'impulsions du compteur (4A) correspondant à la position d'objectif ;
- Pm : valeur de comptage d'impulsions du compteur (4A) correspondant à la position équivalente d'objectif (c'est-à-dire, position moyenne d'objectif pour la quantité totale de lumière stockée dans les moyens de réception de lumière à stockage de charge (2)) ;
- Pc : valeur de comptage d'impulsions à l'instant où la position équivalente est déterminée par lesdits moyens de détermination (c'est-à-dire, position de l'objectif immédiatement avant le début de la période suivante de stockage de charge (T)) ;
- Ps1 : valeur obtenue en convertissant la valeur d'écart de mise au point correspondant au signal photoélectrique en un nombre d'impulsions.

3. Système selon la revendication 1 ou 2, dans lequel lesdits moyens de calcul (4) sont agencés pour calculer une première valeur d'écart de mise au point comprenant ladite valeur de déplacement dudit objectif (1) et pour calculer une deuxième valeur d'écart de mise au point ne comprenant pas ladite valeur de déplacement dudit objectif (1).

4. Système selon la revendication 3, dans lequel lesdits moyens de calcul (4) sont agencés pour convertir ladite première valeur d'écart de mise au point en un nombre correspondant à un nombre de signaux de position et pour calculer un nombre de signaux de position correspondant à ladite position équivalente.

5. Système selon la revendication 4, dans lequel lesdits moyens de calcul (4) sont agencés pour calculer un nombre de signaux de position correspondant à ladite deuxième valeur d'écart de mise au point sur la base du nombre de signaux de position correspondant à ladite première valeur d'écart de mise au point et du nombre de signaux de position correspondant à ladite position équivalente.

## FIG. 1

## FIG. 2

# FIG. 3

# FIG. 4A

START

$S = \Phi$ — 1

START ACCUMULATION OF CCD — 2

STORAGE TIME ENDED ? — 3
N / Y

EXECUTE ALGORITHM — 4

CONVERT AMOUNT OF DEFOCUS INTO PULSE NUMBER Ps1 — 5

CALCULATE PULSE NUMBER Pm=S/T(T:STORAGE TIME) AT MEAN POSITION OF A LENS DURING ACCUMULATION OF CCD — 6

READOUT PULSE COUNT VALUE Pc — 7

CALCULATE PULSE COUNT VALUE Pc2 BY Ps2=Ps1-(Pc-Pm) — 8

START SERVO — 9

# FIG. 4B

PULSE INTERRUPTION

IN STORAGE TIME ? — 10
N / Y

READOUT CURRENT TIME, CALCULATE ELAPSED TIME tn AND STORE CURRENT TIME — 11

$S \leftarrow S+Pn \cdot tn$ (n:PULSE COUNT VALUE) — 12

RETURN

14

FIG. 5
PRIOR ART

FIG. 7
PRIOR ART

FIG. 8

# FIG. 6
# PRIOR ART

```
                    ┌─────────┐
                    │  START  │
                    └────┬────┘
                         │
         ┌───────────────▼──────────────────────┐
    ┌───►│    START ACCUMULATION OF CCD          │
    │    └───────────────┬──────────────────────┘
    │                    │
    │         ┌──────────▼──────────┐
    │      ┌─►╱                      ╲
    │      │ ╱   STORAGE TIME ENDED ? ╲
    │    N └─╲                        ╱
    │         ╲──────────┬──────────╱
    │                    │ Y
    │         ┌──────────▼──────────────┐
    │         │   OUTPUT CCD DATA (AD)   │
    │         └──────────┬──────────────┘
    │         ┌──────────▼──────────────┐
    │         │    EXECUTE ALGORITHM     │
    │         └──────────┬──────────────┘
    │         ┌──────────▼──────────────┐
    │         │  AMOUNT OF DEFOCUS→      │
    │         │  PULSE NUMBER            │
    │         └──────────┬──────────────┘
    │         ┌──────────▼──────────────┐
    │         │      START SERVO         │
    │         └──────────┬──────────────┘
    │                    │
    │         ┌──────────▼──────────┐
    │      ┌─►╱                      ╲
    │      │ ╱   SERVO COMPLETED ?    ╲
    │    N └─╲                        ╱
    │         ╲──────────┬──────────╱
    │                    │ Y
    └────────────────────┘
```